# EUROPEAN PATENT APPLICATION

(11) **EP 4 417 452 A1**
(43) Date of publication of application: **21.08.2024**
(21) Application number: 23157095.3
(22) Date of filing: 16.02.2023
(51) Int. Cl.: B60K 11/08

(54) **COUPLING DEVICE**

(71) Applicant: Röchling Automotive SE, 68165 Mannheim (DE)
(72) Inventor: Schuch, Jörg, 55595 Hargesheim (DE); Schneider, Jürgen, 67550 Worms (DE)
(74) Representative: Ullrich & Naumann PartG mbB

(57) **Abstract**

The invention relates to a coupling device for a plurality of closing elements of a shutter device for an air passage opening, comprising a body, a plurality of openings, each adapted for receiving a rotatable pin of a closing element, wherein at least one guiding element is arranged at the body in extension of an axis of at least one opening, such that a pin of a closing element when inserted in the opening is supported by the at least one guiding element.

## Description

The invention relates to a coupling device for a plurality of closing elements of a shutter device for an air passage opening, comprising a body and a plurality of openings, each adapted for receiving a rotatable pin of a closing element.

The invention further relates to a shutter device for at least one, preferably two, air passage openings, comprising a carrier with at least one air passage opening through which air can flow and a plurality of closing elements, preferably flaps, which are arranged on the carrier and can be moved between at least two operating positions of different degrees of covering of the air passage opening with an actuator device.

Although applicable to any kind of shutter device, the present invention will be explained with regard to a shutter device for an air passage opening in front of a car radiator.

Shutter devices for an air passage opening in front of a car radiator are well known. For instance EP 3 411 256 B1 discloses a shutter device for an air inlet in the front face of a motor vehicle, comprising a support frame, at least one louvre mounted to pivot about a pivoting axis between a closed position and an open position, wherein said at least one louvre being installed within the support frame, at least one control element controlling the positioning of the one or more louvres, wherein said control element comprising: a control rod connected to said at least one louvre and an actuator capable of applying a translational movement to the control rod in such a manner as to cause said at least one louvre to pivot. The closure device comprises a device for guiding the control rod in translation. The device for guiding the control rod is provided in form of a guiding channel adjacent the movement direction of the control rod, in which the control rod is slidably engaged.

WO 2019/202146 A1 discloses an active aerodynamic device comprising a frame supporting upright between which at least two sets of transversely juxtaposed flaps are articulated in rotation, the axes of rotation of one set of flaps being parallel to each other and coplanar in pairs with the axes of an adjacent set of flaps and the axes of rotation of two adjacent sets of flaps together forming a given non-zero angle. Each flap comprises, at least one of its lateral ends, a tie rod, a first end of which forms a fixed link coaxial with the axis of the flap and a second end of which forms an annular linear link with a force transfer member in order to transmit the movement from a driving set of flaps to an adjacent following set of flaps. The force transfer member comprises guide means that form, with a slide arranged on the upright separating the two adjacent sets of flaps, at least two bilateral straight linear links.

One of the disadvantages however is that the guide means have permanent surface contact to the slide causing friction. This friction has to be overcome by an actuator for operating the flaps. In case of a high velocity of the vehicle there is a risk that the actuator cannot operate the flaps properly, not only due to the large air resistance but also due to the high friction.

An objective of the present invention is therefore to provide guide means for a shutter device having a lower friction while providing a reliable operation of the closing elements. A further objective of the present invention is to provide a shutter device requiring little installation space. An even further objective of the present invention is to provide an alternative coupling device and an alternative shutter device.

The above-mentioned objectives may be accomplished by a coupling device for a plurality of closing elements of a shutter device for an air passage opening, comprising a body, a plurality of openings, each adapted for receiving a rotatable pin of a closing element, characterized in that at least one guiding element is arranged at the body in extension of an axis of at least one opening such that a pin of a closing element when inserted in the opening is supported by the at least one guiding element.

The above-mentioned objectives may be accomplished by a shutter device for at least one, preferably two, air passage openings, comprising a carrier with at least one air passage opening through which air can flow, a plurality of closing elements, preferably flaps, which are arranged on the carrier and can be moved between at least two operating positions of different degrees of covering of the air passage opening with an actuator device, characterized in that the actuator device comprises a coupling device according to one of the claims 1-7 adapted to move the plurality of closing elements between the at least two operating positions.

One of the advantages that may be provided is that the construction space can be reduced. One of the further advantages that may be provided is that reliability of the operation of the shutter device is enhanced since the friction for guiding the coupling device is significantly reduced. One of the further advantages that may be provided is an easy installation and a cost effective manufacturing.

Further features, advantages and preferred embodiments are disclosed or may become apparent in the following.

According to a preferred embodiment, the number of openings is at least three, the openings being aligned along a side of the body such that at least one middle opening and two end openings are provided, wherein said at least one guiding element is provided for an end opening, preferably wherein each end opening is provided with a guiding element. An "end opening" is an opening having only one direct neighbor opening, wherein a "middle opening" has two direct neighbor openings. One of the advantages may be that an especially reliable guiding is provided so that a tilting of the coupling device is avoided over its entire length.

According to a further preferred embodiment, the at least one guiding element is provided in form of a protrusion of the body. One of the advantages may be that a reliable while easy and cost-effective guiding element can be provided. Of course, it is also possible to manufacture guiding element and body separately. For instance, the guiding element can be preferably releasably fixed to the body by means of a screw connection or a glue connection.

According to a further preferred embodiment, the height and/or shape of the at least one guiding element is formed such to cover 50% or more, preferably 75% or more of the cross-section of an opening when looking along the axis of the opening. One of the advantages may be that a reliable guiding is provided with a reduced friction.

According to a further preferred embodiment, the at least one guiding element has a cross-section being at least one of
- rectangular,
- truncated pyramidal,
- arc,
- cross-shape.

One of the advantages may be that an easy manufacturing can be provided. When having a round or sloping surface or form, an easy demoulding can be provided.

According to a further preferred embodiment, the body has a, preferably rounded, at least L-shaped, preferably U-shaped, cross-section, comprising a flat base and at least one leg, preferably two legs at opposite sides, wherein said plurality of openings is provided at said at least one leg, preferably at said two legs, and wherein said at least one guiding element is provided at the flat base. One of the advantages may be that an easy and reliable operation for a plurality of closing elements can be provided.

According to a further preferred embodiment, the at least one guiding element has a height when measured perpendicular to the flat base, which is equal or smaller than the distance of the center of the at least one opening to the flat base. This enables saving construction space and construction material while providing a reliable guiding.

According to a further preferred embodiment, the closing elements are rotatably arranged on the carrier and rotatably arranged in the coupling device, such that the closing elements are movable between the at least two operating positions by the coupling device when moving the coupling device perpendicular to the rotation axes of the closing elements. One of the advantages may be that that a reliable simultaneous operation of a plurality of closing elements can be provided.

According to a further preferred embodiment, the closing elements comprise each a pin placeable within an opening of the coupling device. One of the advantages may be that an easy installation and operation of the closing elements by the coupling device can be provided.

According to a further preferred embodiment, at least one of the pins has a conical surface towards the at least one guiding element and/or the at least one guiding element has a conical surface towards a pin. One of the advantages may be that an easy demoulding and an easy installation can be provided. Further, the friction is reduced with regard to the guiding element.

According to a further preferred embodiment, the body of the coupling device has a U-shaped or H-shaped cross-section, comprising a flat base and two legs at opposite sides of the body, wherein said plurality of openings is provided at the two legs, and wherein said at least one guiding element is provided at the flat base, preferably wherein an even number of guiding elements is provided. One of the advantages may be that an easy operation of a plurality of closing elements can be provided.

According to a further preferred embodiment, for each leg two guiding elements are provided, preferably wherein each of the two guiding elements for a leg is arranged at the end openings of each leg. One of the advantages may be that an especially reliable guiding is provided so that a torsion of the coupling device is avoided over its entire length.

There are several ways how to design and further develop the teaching of the present invention in an advantageous way. To this end, it is to be referred to the patent claims subordinate to the independent claims on the one hand and to the following explanation of further embodiments of the invention by way of example, illustrated by the figures on the other hand. In connection with the explanation of the further embodiments of the invention by the aid of the figures, generally further embodiments and further developments of the teaching will be explained.

In the drawings
- Fig. 1: shows an underside view of a coupling device according to an embodiment of the present invention;
- Fig. 2: shows schematically a detail at a corner of the coupling device according to an embodiment of the present invention; and
- Fig. 3: shows schematically a shutter device according to an embodiment of the present invention.

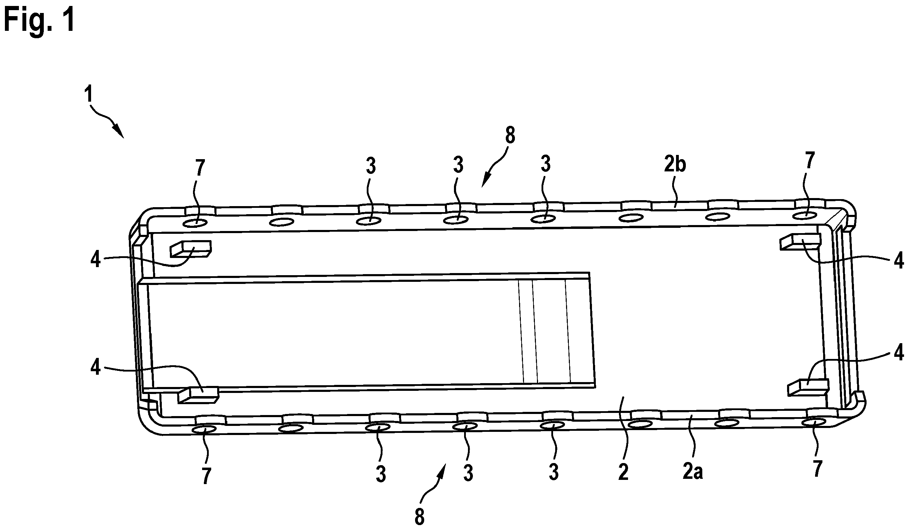

Figure 1 shows an underside view of a coupling device according to an embodiment of the present invention.

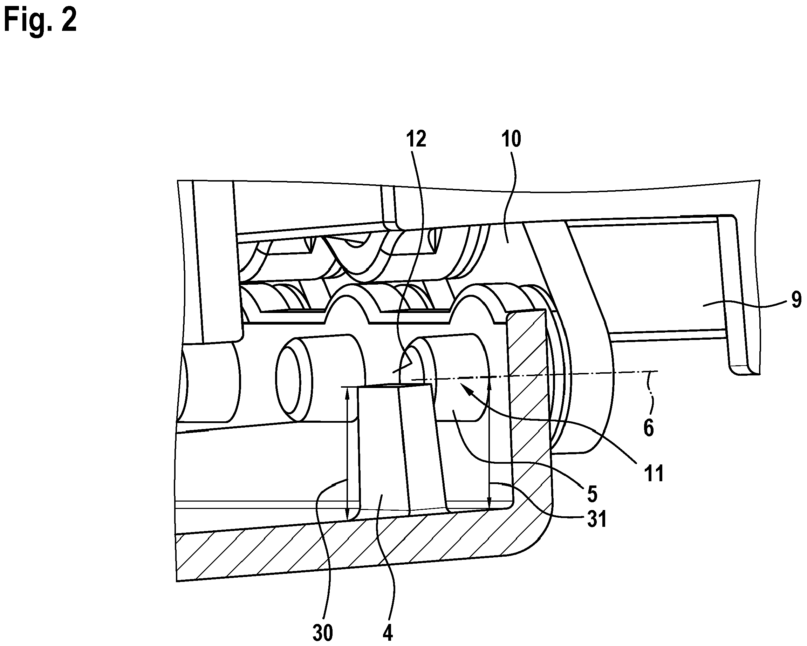

In Detail, Figure 1 shows a coupling device 1 with viewing direction to the bottom side. The coupling device 1 has a body 2 with rectangular cross section and rounded edges. At the longer sides of the body 2, at each side an edge or leg 2a, 2b extends at a right angle from the body 2. The legs 2a, 2b are arranged parallel to each other. On each of the legs 2a, 2b, a plurality of openings 3 is arranged in a regular or periodic manner. In Figure 1 eight openings 3 on each leg 2a, 2b are provided. The end openings 7, i.e. the openings, which have only one neighbor opening 3, each have a protrusion 4 assigned the corresponding end opening 7. Between the two end openings 7 along each leg 2a, 2b, a plurality of middle openings 8, here six openings 8, is arranged. The protrusions 4 extend from the underside of the body 2 - as shown here - and have the shape of a truncated pyramid with rectangular cross-section. The longer side of the rectangular cross-section of each of the protrusions 4 is perpendicular to an axis 6 (shown in Figure 2) of the end opening 7.

Figure 2 shows schematically a detail at a corner of the coupling device according to an embodiment of the present invention.

In Detail, Figure 2 shows the area of an end opening 7 of the coupling device 1 of Figure 1. A pin 5 of a connecting element 10 to connect the coupling device 1 with a closing element 9 of a shutter device 100 extends through the end opening 7. The pin 5 has conical shape 11, which may allow reduced friction. As shown in Figure 2, the surface 12 in frictional contact with the pin 5 has a smaller diameter than the overall diameter of the pin 5. For guiding, only part of the surface of the pin 5 is in frictional contact with the protrusion 4. The height 30 of the protrusion 4 is smaller than the height 31 of the axis of the end opening 7 related to the flat part of the body 2. The surface of the protrusion 4 covers at least 50% of the area of the cross section of the opening 3, preferably more than 75%.

The shape of the surface 12 of the pin 5 being in frictional contact can have in alternative embodiments not shown here, different forms like a ball, cone, pyramid or the like.

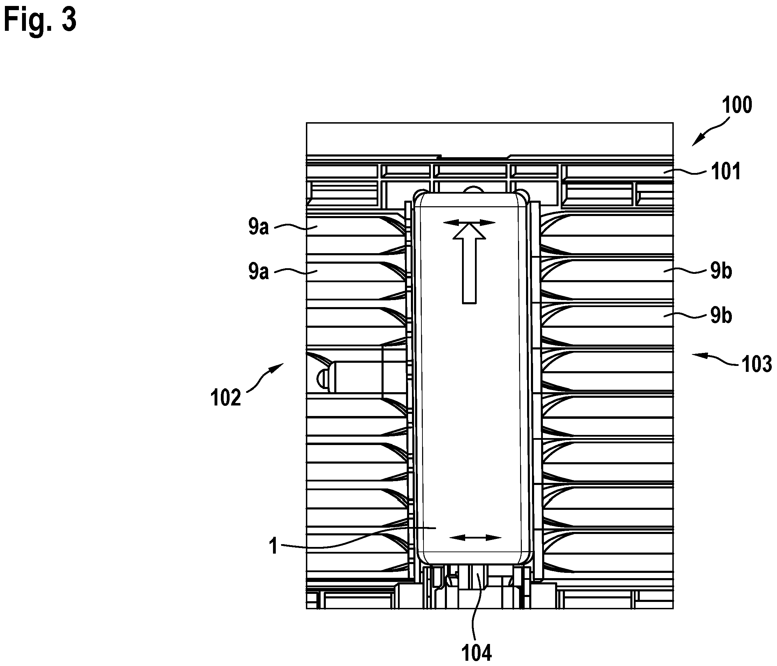

The protrusions 4 on the coupling device 1 prevent the coupling device 1 from turning away to one side, as it is in contact with the kinematic pin 5 of the end closing elements 9. Since only the locally limited surface 12 of the pin 5 rubs between the pin 5 and the protrusions 4 on the coupling device 1 and since there is no relative movement of these components, friction is significantly reduced. A tapered design of the pin 5 as shown in Figure 2 can further reduce friction. Furthermore, this design can reduce the slackness in the Y-direction of the coupling device 1, i.e. the direction parallel to the smaller sides of the rectangular shaped coupling device 1 or the operation direction for operating the closing elements 9a, 9b (shown in Figure 3). In case of angled closing elements 9, the variance in the Y direction of the coupling device 1 changes here between the open and closed positions. Excessive slackness of the coupling device 1 in the Y-direction causes increased noise.

Figure 3 shows schematically a shutter device according to an embodiment of the present invention.

In Figure 3 a front view of a shutter device 100 is shown. The shutter device 100 comprises a carrier 101 having on two sides an air passage opening 102, 103. The air passage opening 102, 103 is covered by a plurality of closing elements 9a, 9b, which can be moved between an at least partially open position or a closed position as shown here. The closing elements 9a, 9b, which are arranged via connecting elements 10 at the coupling device 1, are arranged between the two air passages openings 102, 103. The coupling device 1 can then operate the closing elements 9a, 9b for the two air passage openings 102, 103, i.e. to move them between an open, partially open or a closed position. The coupling device 1 is connected to an actuator or drive 104, which causes the coupling device 1 to move up or down in the plane of the Figure 3 for operation of the closing elements 9a, 9b.

In order to prevent the coupling device 1 from tilting around, the axis of the driven closing elements 9a, 9b in the end stop area and the four protrusions 4 are located on the coupling device 1 in order to strike the kinematic pin 5 of the end closing elements 9a, 9b.

At least one embodiment may provide at least one of the following features and/or at least one of the following advantages:
- Easy and less cost-intensive manufacturing.
- Reduced construction space.
- Reliable operation.
- Easy assembling and disassembling.
- Operation of a plurality closing elements simultaneously.
- Easy integration.
- Reduced friction.
- Effective centering.

Many modifications and other embodiments of the invention set forth herein will come to mind to the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

### List of reference signs

- 1: Coupling device
- 2: Body
- 2a, 2b: Leg of the body
- 3: Openings
- 4: Protrusion
- 5: Pin
- 6: Axis of the opening
- 7: End opening
- 8: Middle opening
- 9, 9a, 9b: Closing element
- 10: Connecting element
- 11,12: Surface

- 30: Height protrusion
- 31: Height opening center

- 100: Shutter device
- 101: Carrier
- 102, 103: Air passage opening
- 104: Actuator

## Claims

1. Coupling device (1) for a plurality of closing elements (9, 9a, 9b) of a shutter device (100) for an air passage opening (102, 103), comprising
a body (2),
a plurality of openings (3), each adapted for receiving a rotatable pin (5) of a closing element (9, 9a, 9b),
**characterized in that**
at least one guiding element (4) is arranged at the body (2) in extension of an axis (6) of at least one opening (3), such that a pin (5) of a closing element (9, 9a, 9b) when inserted in the opening (3) is supported by the at least one guiding element (4).

2. Coupling device (1) according to claim 1, **characterized in that** the number of openings (3) is at least three, the openings (3) being aligned along a side of the body such that at least one middle opening (8) and two end openings (7) are provided, wherein said at least one guiding element (4) is provided for a end opening (7), preferably wherein each end opening (7) is provided with a guiding element (4).

3. Coupling device (1) according to one of the claims 1-2, **characterized in that** the at least one guiding element (4) is provided in form of a protrusion of the body (2).

4. Coupling device (1) according to claim 3, **characterized in that** the height (30) and/or shape (11, 12) of the at least one guiding element (4) is formed such to cover 50% or more, preferably 75% or more of the cross-section of an opening (3) when looking along the axis (6) of the opening (3).

5. Coupling device (1) according to one of the claims 1-4, **characterized in that** the at least one guiding element (4) has a cross-section being at least one of
- rectangular,
- truncated pyramidal ,
- arc,
- cross-shape.

6. Coupling device (1) according to one of the claims 1-5, **characterized in that** the body (2) has a, preferably rounded, at least L-shaped, preferably U-shaped, cross-section, comprising a flat base and at least one leg, preferably two legs (2a, 2b) at opposite sides, wherein said plurality of openings (3) is provided at said at least one leg, preferably at said two legs (2a, 2b), and wherein said at least one guiding element (4) is provided at the flat base.

7. Coupling device (1) according to claim 6, **characterized in that** the at least one guiding element (4) has a height (30) when measured perpendicular to the flat base, which is equal or smaller than the distance (31) of the center of the at least one opening (3) to the flat base.

8. Shutter device (100) for at least one, preferably two, air passage openings (102, 103), comprising
a carrier (101) with at least one air passage opening (102, 103) through which air can flow,
a plurality of closing elements (9, 9a, 9b), preferably flaps, which are arranged on the carrier (101) and can be moved between at least two operating positions of different degrees of covering of the air passage opening (102, 103) with an actuator device (104),
**characterized in that**
the actuator device (104) comprises a coupling device (1) according to one of the claims 1-7 adapted to move the plurality of closing elements (9, 9a, 9b) between the at least two operating positions.

9. Shutter device (100) according to claim 8, **characterized in that** the closing elements (9, 9a, 9b) are rotatably arranged on the carrier (101) and rotatably arranged in the coupling device (1), such that the closing elements (9, 9a, 9b) are movable between the at least two operating positions by the coupling device (1) when moving the coupling device (1) perpendicular to the rotation axes of the closing elements (9, 9a, 9b).

10. Shutter device (100) according to claim 9, **characterized in that** the closing elements (9, 9a, 9b) comprise each a pin (5) placeable within an opening (3) of the coupling device (1).

11. Shutter device (100) according to claim 10, **characterized in that** at least one of the pins (5) has a conical surface (12) towards the at least one guiding element (4) and/or the at least one guiding element (4) has a conical surface (12) towards a pin (5).

12. Shutter device (100) according to one of the claims 8-11, **characterized in that** the body (2) of the coupling device (1) has a U-shaped or H-shaped cross-section, comprising a flat base and two legs (2a, 2b) at opposite sides of the body (2), wherein said plurality of openings (3) is provided at the two legs (2a, 2b), and wherein said at least one guiding element (4) is provided at the flat base, preferably wherein an even number of guiding elements (4) is provided.

13. Shutter device (100) according to claim 12, **characterized in that** for each leg (2a, 2b) two guiding elements (4) are provided, preferably wherein each of the two guiding elements (4) for a leg (2a, 2b) is arranged at the end openings (7) of each leg (2a, 2b).
